# EUROPEAN PATENT SPECIFICATION

(11) **EP 2 284 002 B1**
(45) Date of publication and mention of the grant of the patent: **07.10.2015**
(21) Application number: 09741717.4
(22) Date of filing: 08.05.2009
(51) Int. Cl.: B32B 15/04

(54) **MAGNESIUM ALLOY HONEYCOMB BOARD AND PREPARATION METHOD THEREOF**
MAGNESIUMLEGIERUNGSWABENPLATTE UND HERSTELLUNGSVERFAHREN DAFÜR
PLAQUE EN NID D'ABEILLE EN ALLIAGE DE MAGNÉSIUM ET PROCÉDÉ DE PRÉPARATION DE CELLE-CI

(30) Priority: 09.05.2008 CN 200810011370
(43) Date of publication of application: 16.02.2011
(73) Proprietor: Dalian Jiaotong University, Liaoning 116028 (CN); Yingkou Yinhe Magnesium And Aluminum Alloy Co., Ltd., Liaoning 115001 (CN); Beijing Wonderroad Magnesium Technology Co., Ltd, Beijing 100080 (CN)
(72) Inventor: QUAN, Gaofeng, Dalian Liaoning 116028 (CN); ZHOU, Heling, Yingkou Liaoning 115001 (CN)
(74) Representative: Price, Nigel John King
(86) International application number: PCT/CN2009/071692
(87) International publication number: WO 2009/135442

(56) References cited:
- CN-A- 101 269 553
- CN-Y- 2 463 492
- DE-A1- 4 323 922
- GB-A- 1 325 357
- JP-A- 2004 161 190

## Description

### FIELD OF THE TECHNOLOGY

The present invention relates to a honeycomb structure made of metal, in particular to a magnesium alloy honeycomb board production process.

### BACKGROUND

A honeycomb board is a lightweight mechanical engineering structure with high bending and compression strength, and is setup through bonding an upper panel, a lower panel and a honeycomb core in between.

Common honeycomb boards at present include the following three types: paper honeycomb board, glass fiber reinforced plastic honeycomb board and aluminum honeycomb board. Honeycomb cores of the paper honeycomb board are formed through gluing of impregnated paper resin and composite boards of plant or synthetic polymers. With low cost and low strength, the paper honeycomb board cannot endure dampness and is therefore only used for such structures as light-duty mobile houses. Being made of composite materials of glass fiber and resin, the glass fiber reinforced plastic honeycomb board has the characteristics of light weight and high strength, but meanwhile has the disadvantages of possessing low impact strength, being easily aged and using unrecyclable resources; being formed through the glue-jointing of aluminum honeycomb cores and aluminum alloy sheets, the aluminum honeycomb board has higher strength as well as good weather resistance, and is already used as floor and walls of airplanes, rapid trains and so on.

Along with the development in lightweight transportation equipment, many original aluminum alloy structures are faced with the requirement of further weight reduction, and the aluminum honeycomb board cannot meet the new need any more due to its weight.

The performances of aluminum alloy and magnesium alloy for manufacturing honeycomb board are compared - see Table 1 below for relevant parameters:

**Table 1**

| Material | Density (g/cm3) | Vickers hardness (HV) | Yield strength (MPa) | Specific strength |
|---|---|---|---|---|
| Aluminum alloy 5083 | 2.75 | 45 to 60 | 80 to 200 | 29.1 to 72.7 |
| Magnesium alloy AZ31B | 1.76 | 55 to 75 | 120 to 230 | 68.2 to 130.7 |

Magnesium alloy is much lighter in weight and has the advantage of specific strength much higher than for aluminum alloy. The accurate bending and forming of magnesium alloy foil are rather difficult, while the honeycomb board requires regularly-hexagonal honeycomb cores to achieve the mechanical strength for the bearing effect to the maximum degree. Therefore, the forming parameters and process of the magnesium alloy foil are required to be accurately formed and assembled so as to meet the requirements for the structure and performance of the honeycomb board.

JP 2004 161190 A discloses a honeycomb construction for the inside of a leisure board main body (e.g. surfboard) formed by a metal material, or each said metal material and composite material of aluminum alloy, a magnesium alloy, or a titanium alloy by a metal material, or each said metal material and composite material of aluminum alloy, a magnesium alloy, or a titanium alloy.

GB 1 325 357 A discloses a method of applying an adhesive to a substrate having an aperture surface, which comprises forming fibres of the adhesive, and depositing the fibres on the aperture surface in random fashion.

### SUMMARY

According to the present invention there is provided the method of claim 1.

Compared with the prior art, magnesium alloy honeycomb boards manufactured using the methods of the present invention can have the same strength as aluminum honeycomb boards, but with a reduction of 25 to 33% in weight per unit area with an increase of over 20% in compression strength.

Being capable of achieving weight reducing effect, the magnesium alloy honeycomb board not only can be used as components like wallboard, floor, partition board, etc. in such transportation equipment as spacecrafts, aircrafts, light-weight rapid trains, urban railway trains, busses, etc., but also can be applied in other structures as panel or partition board. If being used as the floor of a new-generation underground train and combined with a magnesium alloy skeleton, the magnesium alloy honeycomb board will achieve an effect of over 25% lighter than the present aluminum alloy structure, thereby solving the problem of overweight built-in structure of the railway train, realizing great reduction in weight, noise and vibration, obviously increasing the overall train manufacturing and operating efficiency, improving the boarding conditions, and realizing human-oriented traffic.

### BRIEF DESCRIPTION OF THE DRAWINGS

Figure 1 indicates the foil tape rolled and cut into certain thickness and width;
Figure 2 indicates the honeycomb core blank formed through accurate and intact bending forming the magnesium alloy foil;
Figure 3 indicates the honeycomb core structure formed through the stacking and bonding of the honeycomb core blank;
Figure 4 indicates the honeycomb board formed through the glue-jointing combination and solidification of the panels with the honeycomb core.

In the figures,
1- honeycomb core structure 2- upper panel 3- lower panel

### DETAILED DESCRIPTION

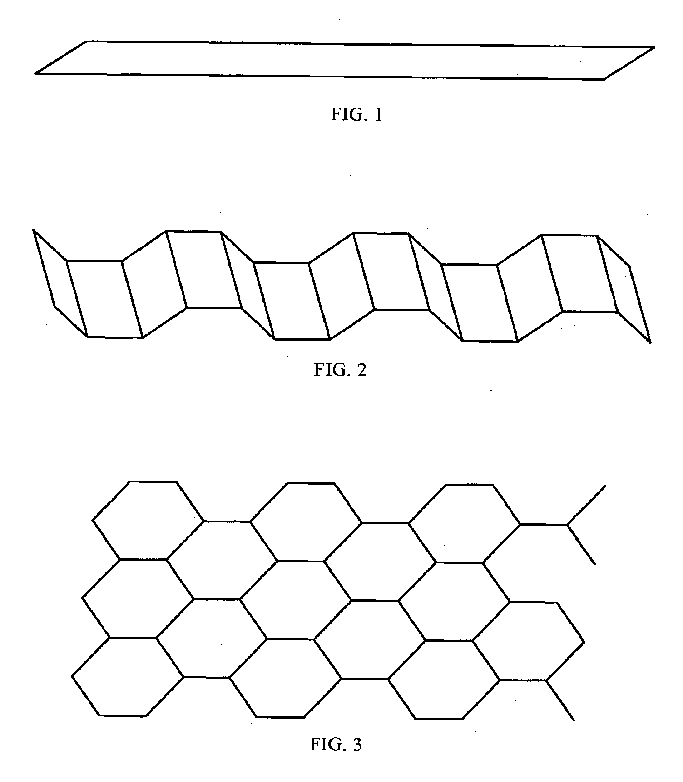

Further detailed description about the present invention is made below combining with the schematic diagram for the production process of the magnesium alloy honeycomb board:
(1) Manufacturing the honeycomb core structure 1: magnesium alloy such as AZ31B is manufactured into foil of a thickness of 0.08 to 0.25mm through hot or cold rolling, and processing parameters of the foil after heat treatment and surface treatment are shown in Table 1. As shown in Figure 1, the foil is cut into tapes with a width of 6 to 38mm;

The foil tape is then shaped into the honeycomb core blank through accurate and intact bending forming. As shown in Figure 2, the formed fillet radius is 0.4mm, and correspondingly the forming strain rate is 0.0015/s;

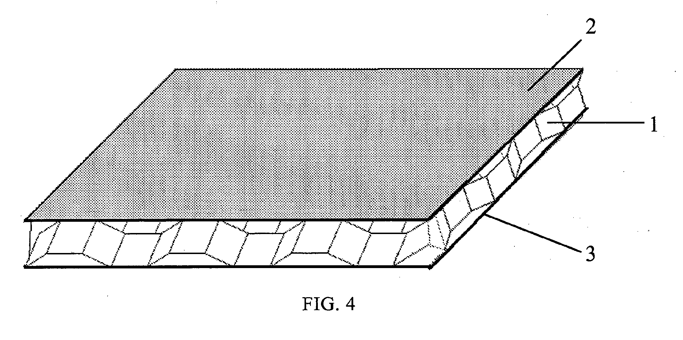

As shown in figure 3, the formed honeycomb core blank is placed on a working platform and is then solidified into the regularly-hexagonal honeycomb core structure 1 with a thickness of 6 to 38mm under a designated temperature of 80 to 120°C and a designated pressure of 0.3 to 1.0MPa after glue sizing, positioning and stacking.
(2) Preparing the upper panel 2 and the lower panel 3: magnesium alloy with the same or different components is adopted to be rolled into sheets, and hot-rolled or cold-rolled sheets are selected according to the application requirement. Alloys such as AZ31B, AZ41 or ZK60 can be selected as materials according to the requirements of users, and the thickness and breadth of the alloys are respectively within 0.6 to 3.5mm and 450 to 1,250 × 600 to 3,000mm. Glue sizing is carried out on the alloy for standby use after surface treatment;
(3) Glue-jointing combining the honeycomb core structure 1 with the upper panel 2 and the lower panel 3: as shown in Figure 4, glue sizing and pressurizing solidification are carried out between the honeycomb core structure 1 and the upper panel 2 as well as the lower panel 3, so as to form the honeycomb board with a thickness of 8 to 45mm and a breadth the same as that of the panels.
(4) Making surface treatment according to the requirement: for example, anodic oxidation is carried out to achieve higher surface hardness and better wear resistance as well as good corrosion resistance.

The upper panel, the lower panel and the honeycomb core structure of the magnesium alloy honeycomb board of the present invention all adopt magnesium alloy, and the honeycomb core structure with regular-hexagonal honeycomb holes is formed through the cutting, plastic bending, accurate forming and positioned bonding of the rolled high-strength magnesium alloy foil. After being glue-jointed together, the honeycomb core structure and the high-strength magnesium alloy sheets form the magnesium alloy honeycomb board with high strength and ultra-lightweight through elevated temperature pressurizing solidification or room temperature solidification.

The above are only the preferred embodiments of the present invention, to which the protective range of the present invention is not limited. Any equivalent replacement or modification made by technical personnel familiar with this technical field within the technical range disclosed by the present invention according to the technical solution and the inventive concept thereof should all be included within the protective range of the present invention.

## Claims

1. A method of manufacturing a magnesium alloy honeycomb board, the method comprising the steps of manufacturing a honeycomb core structure (1), preparing panels (2, 3), glue-jointing the honeycomb core structure with the panels, forming the honeycomb board through pressurizing solidification, and surface treating according to requirement, **characterized in that** the step of manufacturing the honeycomb core structure itself comprises the following steps:
(1) rolling a magnesium alloy fillet, using a hot or cold rolling process, to roll the magnesium alloy into a foil having a thickness of 0.08 to 0.25mm;
(2) cutting the magnesium alloy foil into foil tapes having a width of 6 to 38mm according to the design requirement of the honeycomb board;
(3) bending forming the magnesium alloy foil tapes accurately and intactly, wherein after plastic formation for angle defining, a formed fillet radius is within 0.4 to 1.2mm, and correspondingly a forming strain rate is within 0.01 to 0.00001/s;
(4) laminately positioning, glue-sizing, bonding and solidifying a honeycomb core blank to form the said honeycomb core structure, wherein a thickness of a manufactured honeycomb core structure is within 6 to 38mm.

2. The method of claim 1, wherein the honeycomb core blank is solidified at a temperature of 80 to 120°C and at a pressure of 0.3 to 1.0MPa.

3. The method of claim 1 or claim 2, wherein the surface treating includes anodic oxidation of the manufactured honeycomb core structure.

## Patentansprüche

1. Verfahren zur Herstellung einer Magnesiumlegierungs-Wabenplatte, wobei das Verfahren die folgenden Schritte umfasst: Herstellung einer Wabenkernstruktur (1), Herstellung von Platten (2, 3), Klebeverbinden der Wabenkernstruktur mit den Platten, Bilden der Wabenplatte durch Druckverfestigung, und Oberflächenbehandlung nach Bedarf, **dadurch gekennzeichnet, dass** der Schritt des Herstellens der Wabenstruktur selbst die folgenden Schritte umfasst:
(1) Walzen einer Magnesiumlegierungsleiste unter Verwendung eines Heiß- oder Kaltwalzverfahrens unter Auswalzen der Magnesiumlegierung zu einer Folie mit einer Dicke von 0,08 bis 0,25 mm;
(2) Schneiden der Magnesiumlegierungsfolie zu Folienbändern mit einer Breite von 6 bis 38 mm gemäß dem Gestaltungserfordernis der Wabenplatte;
(3) Biegeformen der Magnesiumlegierungsfolienbänder in akkurater und intakter Weise, wobei nach plastischer Formung zur Definition des Winkels, der geformte Leistenradius innerhalb 0,4 bis 1,2 mm liegt, und entsprechend die Verformungsgeschwindigkeit innerhalb 0,01 bis 0,00001/Sekunde liegt;
(4) Laminatpositionieren, Verleimen, Verbinden und Verfestigen eines Wabenkernrohlings unter Bildung der Wabenkernstruktur, wobei die Dicke der hergestellten Wabenkernstruktur innerhalb 6 bis 38 mm liegt.

2. Verfahren gemäß Anspruch 1, wobei der Wabenkernrohling bei einer Temperatur von 80 bis 120°C und einem Druck von 0,3 bis 1,0 MPa verfestigt wird.

3. Verfahren gemäß Anspruch 1 oder Anspruch 2, wobei die Oberflächenbehandlung die anodische Oxidation der hergestellten Wabenkernstruktur umfasst.

## Revendications

1. Procédé de fabrication d'un panneau alvéolaire en alliage de magnésium, le procédé comportant les étapes de fabrication d'une structure d'âme alvéolaire (1), de réalisation de plaques (2, 3), d'assemblage par collage de la structure alvéolaire d'âme avec les plaques, de formation du panneau alvéolaire au moyen d'une solidification sous compression, et de traitement de surface en fonction des besoins,
**caractérisé en ce que** l'étape de fabrication de la structure d'âme alvéolaire comprend elle-même les étapes suivantes :
(1) laminage d'un congé de raccordement en alliage de magnésium par une opération de laminage à chaud ou à froid, afin de laminer l'alliage de magnésium pour obtenir une feuille de 0,08 à 0,25 mm d'épaisseur ;
(2) découpage de la feuille d'alliage de magnésium en bandes de feuille de 6 à 38 mm de largeur en fonction des exigences de conception du panneau alvéolaire ;
(3) façonnage précis et net des bandes de feuille d'alliage de magnésium par cintrage, opération durant laquelle, après déformation plastique pour définir un angle, un rayon de congé de raccordement formé se situe dans un intervalle de 0,4 à 1,2 mm et, corrélativement, une vitesse de déformation pour le façonnage se situe dans un intervalle de 0,01 à 0,00001/s
(4) disposition par stratification, encollage, collage et solidification d'une ébauche d'âme alvéolaire pour former ladite structure d'âme alvéolaire, une épaisseur d'une structure d'âme alvéolaire fabriquée se situant dans un intervalle de 6 à 38 mm.

2. Procédé selon la revendication 1, dans lequel l'ébauche d'âme alvéolaire est solidifiée à une température de 80 à 120°C et à une pression de 0,3 à 1,0 MPa.

3. Procédé selon la revendication 1 ou la revendication 2, dans lequel le traitement de surface comprend une oxydation anodique de la structure d'âme alvéolaire fabriquée.
